# EUROPEAN PATENT APPLICATION

(11) **EP 4 390 600 A1**
(43) Date of publication of application: **26.06.2024**
(21) Application number: 22895157.0
(22) Date of filing: 19.07.2022
(51) Int. Cl.: G05D 1/02

(54) **TRANSPORT SYSTEM, AUTOMATED GUIDED VEHICLE, AND METHOD FOR CONTROLLING AUTOMATED GUIDED VEHICLE**

(30) Priority: 19.11.2021 JP 2021188601
(71) Applicant: Murata Machinery, Ltd., Kyoto-shi, Kyoto 601-8326 (JP)
(72) Inventor: UKAI Shohei, Inuyama-shi, Aichi 484-8502 (JP); SUYAMA Norihiko, Inuyama-shi, Aichi 484-8502 (JP); KOGA Bunichiro, Tokyo 101-0062 (JP)
(74) Representative: Stöckeler, Ferdinand
(86) International application number: PCT/JP2022/028119
(87) International publication number: WO 2023/089868

(57) **Abstract**

A transport system includes: a transported object having a long shape in plan view; a station; and an automated guided vehicle including a lifting platform on which the transported object is placed, the automated guided vehicle being configured to self-travel along a predetermined traveling route. The automated guided vehicle has a total length of a vehicle body shorter than a dimension in a longitudinal direction of the transported object in plan view, and a vehicle body width shorter than a dimension in a lateral direction of the transported object in plan view. The automated guided vehicle performs a first traveling direction change operation of changing a traveling direction of the automated guided vehicle so that the traveling direction of the automated guided vehicle is in parallel with the longitudinal direction of the transported object in a state of being under the lower part of the transported object.

## Description

### Technical Field

An aspect of the present invention relates to a transport system, an automated guided vehicle, and a method for controlling the automated guided vehicle.

### Background Art

There is known a transport system including: a transported object; a station at which the transported object is disposed; and an automated guided vehicle including a lifting platform on which the transported object is placed, the automated guided vehicle being configured to self-travel along a predetermined traveling route. As this type of technique, for example, Patent Literature 1 discloses a system including an unmanned vehicle configured to get under a wagon truck (transported object) to lift up the wagon truck, the system configured to transport the wagon truck by the unmanned vehicle to a destination instructed from the outside.

### Citation List

### Patent Literature

[Patent Literature 1] Japanese Unexamined Patent Publication No. H9-185413

### Summary of Invention

### Technical Problem

In the transport system as described above, a transported object having a long shape in plan view may be transported while being placed on the lifting platform of the automated guided vehicle in some cases. In this case, for example, in the case of the automated guided vehicle traveling through a narrow passage, if the transported object is placed on the lifting platform so that a longitudinal direction of the transported object coincides with a width direction of the passage, a problem may be caused such that a large part of the passage is blocked and traffic tends to be hindered.

An object of an aspect of the present invention is to provide a transport system, an automated guided vehicle, and a method for controlling the automated guided vehicle with which the automated guided vehicle that is transporting the transported object can be prevented from hindering traffic.

### Solution to Problem

A transport system according to an aspect of the present invention includes: a transported object having a long shape in plan view; a station at which the transported object is disposed; and an automated guided vehicle including a lifting platform on which the transported object is placed, the automated guided vehicle being configured to self-travel along a predetermined traveling route. The automated guided vehicle has a total length of a vehicle body shorter than a dimension in a longitudinal direction of the transported object in plan view, and a vehicle body width shorter than a dimension in a lateral direction of the transported object in plan view, and performs a first traveling direction change operation of changing a traveling direction of the automated guided vehicle so that the traveling direction of the automated guided vehicle is in parallel with the longitudinal direction of the transported object in a state of being under a lower part of the transported object.

In this transport system, the longitudinal direction of the transported object transported by the automated guided vehicle can be caused to be in parallel with the traveling direction of the automated guided vehicle (hereinafter, also simply referred to as a "traveling direction") by the first traveling direction change operation. Thus, for example, even in the case of the automated guided vehicle traveling in a narrow passage, a length of the transported object in a width direction of the passage can be reduced. As a result, the automated guided vehicle that is transporting the transported object can be prevented from hindering traffic.

In the transport system according to an aspect of the present invention, the first traveling direction change operation may be performed during a period from when the automated guided vehicle enters the station from the predetermined traveling route until the automated guided vehicle returns to the predetermined traveling route from the station. In this case, after the automated guided vehicle enters the station and returns to the predetermined traveling route, the first traveling direction change operation has been already performed and the longitudinal direction of the transported object is in parallel with the traveling direction, so that the automated guided vehicle can be securely prevented from hindering traffic. Herein, the predetermined traveling route may be a route that is planned every time the automated guided vehicle performs automatic traveling on a route from the present location to a destination, or may be a route that is planned by a user of the automated guided vehicle or the transport system to be continuously used thereafter.

In the transport system according to an aspect of the present invention, the automated guided vehicle may perform an entry operation of entering the lower part of the transported object from one side or the other side in the lateral direction. Due to this, the automated guided vehicle can smoothly enter the lower part of the transported object.

In the transport system according to an aspect of the present invention, in the case of carrying out the transported object from the station, the automated guided vehicle may perform the entry operation of entering the lower part of the transported object disposed at the station, perform the first traveling direction change operation, make connection with the transported object by raising the lifting platform and placing the transported object on the lifting platform, and come out from the station together with the transported object. In this case, while the longitudinal direction of the transported object transported by the automated guided vehicle is caused to be in parallel with the traveling direction, the transported object can be easily carried out from the station around which no obstacle is present.

In the transport system according to an aspect of the present invention, in the case of carrying out the transported object from the station, the automated guided vehicle may perform the entry operation of entering the lower part of the transported object disposed at the station, make connection with the transported object by raising the lifting platform and placing the transported object on the lifting platform, come out from the station together with the transported object, disconnect the transported object by lowering the lifting platform and taking down the transported object from the lifting platform, perform the first traveling direction change operation, and make connection with the transported object by raising the lifting platform and placing the transported object on the lifting platform. In this case, while the longitudinal direction of the transported object transported by the automated guided vehicle is caused to be in parallel with the traveling direction, the transported object can be easily carried out from the station around which an obstacle is present.

In the transport system according to an aspect of the present invention, a spin turn may be performed to pivot the automated guided vehicle at a present place in the first traveling direction change operation. In this case, the traveling direction of the automated guided vehicle can be caused to be in parallel with the longitudinal direction of the transported object by using the spin turn.

In the transport system according to an aspect of the present invention, the automated guided vehicle may perform a second traveling direction change operation of changing the traveling direction of the automated guided vehicle so that the traveling direction of the automated guided vehicle is in parallel with the lateral direction of the transported object in a state of being under the lower part of the transported object. Due to this, the automated guided vehicle can easily carry the transported object into stations of various aspects by using the second traveling direction change operation.

In the transport system according to an aspect of the present invention, the automated guided vehicle may perform a coming-out operation of coming out from one side or the other side in the lateral direction of the lower part of the transported object. Due to this, the automated guided vehicle can smoothly come out from the lower part of the transported object.

In the transport system according to an aspect of the present invention, in the case of the automated guided vehicle connected to the transported object by placing the transported object on the lifting platform so that the traveling direction of the automated guided vehicle is in parallel with the longitudinal direction of the transported object, in the case that such an automated guided vehicle carries the transported object into the station, the automated guided vehicle may enter the station together with the transported object, disconnect the transported object by lowering the lifting platform and taking down the transported object from the lifting platform, perform the second traveling direction change operation, and perform the coming-out operation to come out from the station. In this case, while the longitudinal direction of the transported object transported by the automated guided vehicle is caused to be in parallel with the traveling direction, the transported object can be easily carried into the station around which no obstacle is present.

In the transport system according to an aspect of the present invention, in the case of the automated guided vehicle connected to the transported object by placing the transported object on the lifting platform so that the traveling direction of the automated guided vehicle is in parallel with the longitudinal direction of the transported object, in the case that such an automated guided vehicle carries the transported object into the station, the automated guided vehicle may disconnect the transported object by lowering the lifting platform and taking down the transported object from the lifting platform, perform the second traveling direction change operation, make connection with the transported object by raising the lifting platform and placing the transported object on the lifting platform, enter the station together with the transported object, disconnect the transported object by lowering the lifting platform and taking down the transported object from the lifting platform, and perform the coming-out operation to come out from the station. In this case, while the longitudinal direction of the transported object transported by the automated guided vehicle is caused to be in parallel with the traveling direction, the transported object can be easily carried into the station around which an obstacle is present.

In the transport system according to an aspect of the present invention, a spin turn may be performed to pivot the automated guided vehicle at a present place in the second traveling direction change operation. In this case, the traveling direction of the automated guided vehicle can be caused to be in parallel with the lateral direction of the transported object by using the spin turn.

In the transport system according to an aspect of the present invention, the transported object may be a cart configured to carry articles. In this case, the effect described above can be exhibited in the system in which the cart is transported by the automated guided vehicle.

The automated guided vehicle according to an aspect of the present invention is an automated guided vehicle including a lifting platform on which a transported object having a long shape in plan view is placed, the automated guided vehicle being configured to self-travel along a predetermined traveling route. The automated guided vehicle has a total length of a vehicle body shorter than a dimension in a longitudinal direction of the transported object in plan view, and a vehicle body width shorter than a dimension in a lateral direction of the transported object in plan view, and performs a first traveling direction change operation of changing a traveling direction of the automated guided vehicle so that the traveling direction of the automated guided vehicle is in parallel with the longitudinal direction of the transported object in a state of being under a lower part of the transported object.

With this automated guided vehicle, the longitudinal direction of the transported object to be transported can be caused to be in parallel with the traveling direction by the first traveling direction change operation. The automated guided vehicle that is transporting the transported object can be prevented from hindering traffic.

A method for controlling the automated guided vehicle according to an aspect of the present invention is a method for controlling an operation of an automated guided vehicle including a lifting platform on which a transported object having a long shape in plan view is placed, the automated guided vehicle being configured to self-travel along a predetermined traveling route, in which the automated guided vehicle has a total length of a vehicle body shorter than a dimension in a longitudinal direction of the transported object in plan view, and a vehicle body width shorter than a dimension in a lateral direction of the transported object in plan view, and the method includes a first traveling direction change step of changing a traveling direction of the automated guided vehicle so that the traveling direction of the automated guided vehicle is in parallel with the longitudinal direction of the transported object in a state in which the automated guided vehicle is under a lower part of the transported object.

In this method for controlling the automated guided vehicle, the longitudinal direction of the transported object transported by the automated guided vehicle can be caused to be in parallel with the traveling direction at the first traveling direction change step. The automated guided vehicle that is transporting the transported object can be prevented from hindering traffic.

### Advantageous Effects of Invention

According to an aspect of the present invention, it is possible to provide a transport system, an automated guided vehicle, and a method for controlling the automated guided vehicle with which the automated guided vehicle that is transporting a transported object can be prevented from hindering traffic.

### Brief Description of Drawings

[FIG. 1] FIG. 1 is a schematic configuration diagram illustrating a transport system according to an embodiment.
[FIG. 2] FIG. 2 is a perspective view illustrating a cart in FIG. 1.
[FIG. 3] FIG. 3 is a bottom view illustrating the cart in FIG. 1.
[FIG. 4] FIG. 4 is a front view illustrating an example of an internal structure of the cart in FIG. 1.
[FIG. 5] FIG. 5 is a perspective view illustrating a station in FIG. 1.
[FIG. 6] FIG. 6 is a perspective view illustrating an automated guided vehicle in FIG. 1.
[FIG. 7] FIG. 7 is a perspective view illustrating a state in which a cover of the automated guided vehicle in FIG. 1 is removed.
[FIG. 8] FIG. 8 is a block diagram illustrating a configuration of the automated guided vehicle in FIG. 1.
[FIG. 9] FIG. 9 is a perspective view illustrating the cart in the case of being transported by the automated guided vehicle in FIG. 1.
[FIG. 10] FIG. 10(a) is a schematic bird's-eye view for explaining an operation example of the automated guided vehicle at the time of carrying out the cart from the station. FIG. 10(b) is a schematic bird's-eye view illustrating a continuation of FIG. 10(a).
[FIG. 11] FIG. 11(a) is a schematic bird's-eye view illustrating a continuation of FIG. 10(b). FIG. 11(b) is a schematic bird's-eye view illustrating a continuation of FIG. 11(a) .
[FIG. 12] FIG. 12(a) is a schematic bird's-eye view illustrating a continuation of FIG. 11(b). FIG. 12(b) is a schematic bird's-eye view illustrating a continuation of FIG. 12(a) .
[FIG. 13] FIG. 13(a) is a schematic bird's-eye view for explaining another operation example of the automated guided vehicle at the time of carrying out the cart from the station. FIG. 13(b) is a schematic bird's-eye view illustrating a continuation of FIG. 13(a). FIG. 13(c) is a schematic bird's-eye view illustrating a continuation of FIG. 13(b).
[FIG. 14] FIG. 14(a) is a schematic bird's-eye view illustrating a continuation of FIG. 13(c). FIG. 14(b) is a schematic bird's-eye view illustrating a continuation of FIG. 14(a) .
[FIG. 15] FIG. 15(a) is a schematic bird's-eye view for explaining an operation example of the automated guided vehicle at the time of carrying the cart into the station. FIG. 15(b) is a schematic bird's-eye view illustrating a continuation of FIG. 15(a) .
[FIG. 16] FIG. 16(a) is a schematic bird's-eye view illustrating a continuation of FIG. 15(b). FIG. 16(b) is a schematic bird's-eye view illustrating a continuation of FIG. 16(a) .
[FIG. 17] FIG. 17(a) is a schematic bird's-eye view illustrating a continuation of FIG. 16(b). FIG. 17(b) is a schematic bird's-eye view illustrating a continuation of FIG. 17(a) .
[FIG. 18] FIG. 18(a) is a schematic bird's-eye view for explaining another operation example of the automated guided vehicle at the time of carrying the cart into the station. FIG. 18(b) is a schematic bird's-eye view illustrating a continuation of FIG. 18(a). FIG. 18(c) is a schematic bird's-eye view illustrating a continuation of FIG. 18(b).
[FIG. 19] FIG. 19(a) is a schematic bird's-eye view illustrating a continuation of FIG. 18(c). FIG. 19(b) is a schematic bird's-eye view illustrating a continuation of FIG. 19(a) .

### Description of Embodiments

An embodiment will now be described with reference to the drawings. In description of the drawings, like elements are designated by like reference signs, and duplicate description is omitted. The words "upper" and "lower" correspond to an upper and lower direction in a vertical direction.

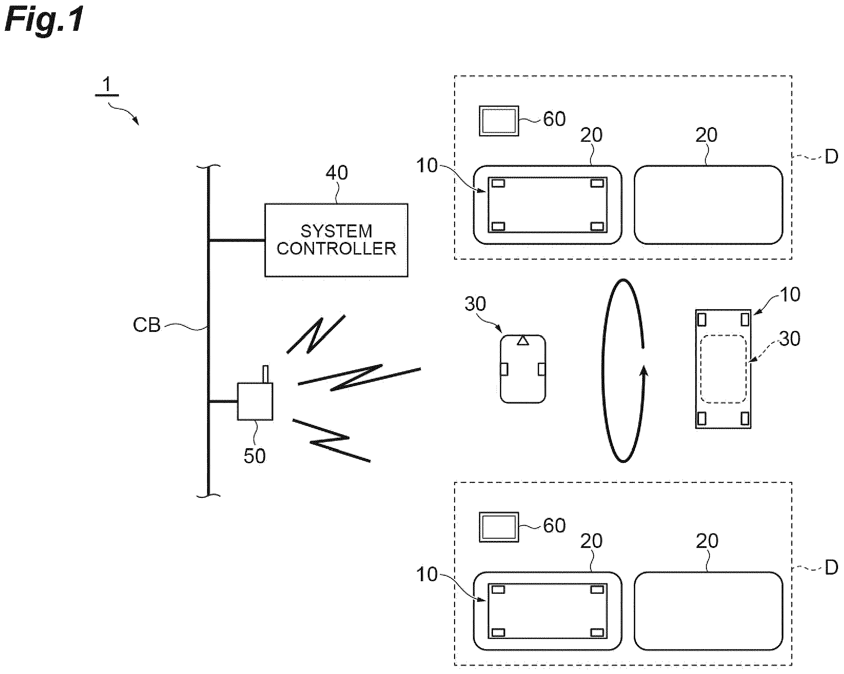

FIG. 1 is a schematic configuration diagram illustrating a transport system 1 according to the embodiment. As illustrated in FIG. 1, the transport system 1 is a system that is installed inside a building such as a hospital, for example, and achieves automatic transportation of a cart (transported object) 10 among a plurality of departments D. The transport system 1 includes a plurality of carts 10, a plurality of stations 20, a plurality of automated guided vehicles 30, a system controller 40, a plurality of access points 50, and a plurality of operation terminals 60.

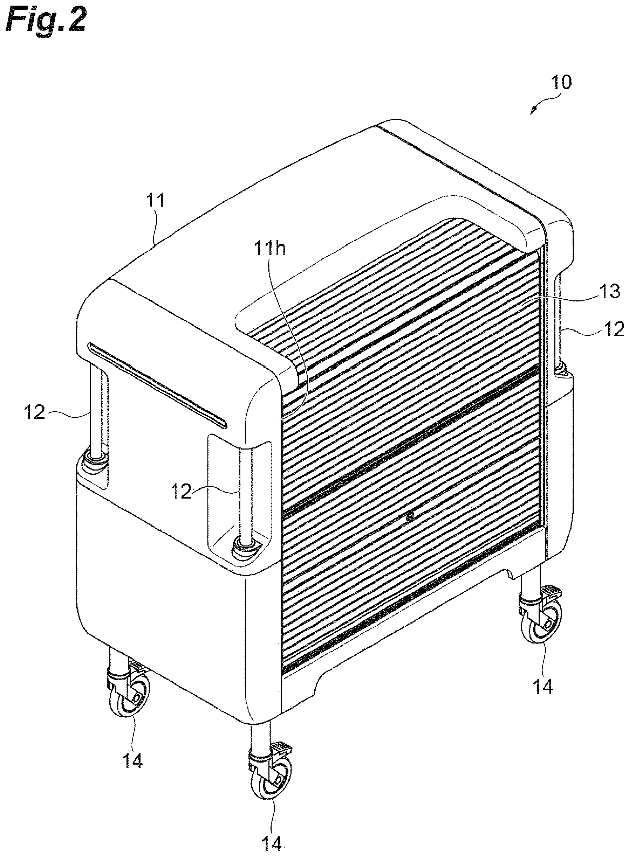

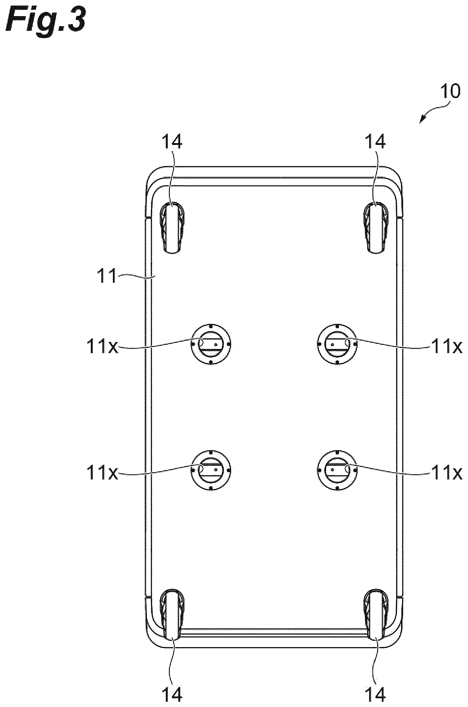

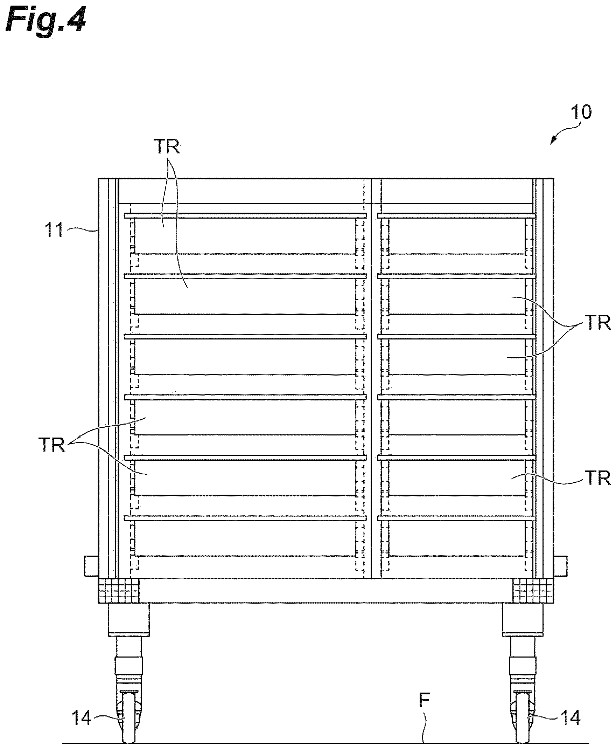

FIG. 2 is a perspective view illustrating the cart 10 in FIG. 1. FIG. 3 is a bottom view illustrating the cart 10 in FIG. 1. FIG. 4 is a front view illustrating an example of an internal structure of the cart 10 in FIG. 1. As illustrated in FIG. 2 and FIG. 4, the cart 10 is a truck configured to house articles. The cart 10 is a cart unit having a rectangular shape in plan view (when viewed from an upper side). In other words, the cart 10 is a rectangular dedicated cart configured to carry articles. Hereinafter, a longitudinal direction of the cart 10 may be simply referred to as a "longitudinal direction", and a lateral direction of the cart 10 may be simply referred to as a "lateral direction" in some cases.

For example, the cart 10 has an external shape of a rectangular parallelepiped shape having a width of 800 mm, a length of 900 mm, and a height of 1400 mm. The cart 10 can also be used as a hand truck. The number of the carts 10 used in the transport system 1 is not particularly limited, and may be 100 to 1000, for example. Examples of an article housed in the cart 10 include a specimen, an injection, a sterilizer (a sterilizing container, a recovery container, and the like), and a medical care material (a Medical Engineering (ME) appliance and the like).

The cart 10 includes a housing 11, grips 12, a shutter 13, and casters 14. The housing 11 has an external shape of a rectangular box shape. An opening 11h is disposed on one side of the housing 11 in the lateral direction. An inner part of the housing 11 can be accessed via the opening 11h. Inside the housing 11, for example, a plurality of tray receiving hooks configured to hook and support an edge of a tray TR in which an article is put are disposed at appropriate positions. Inside the housing 11, a placing board on which an article is placed may be disposed at an appropriate position. As illustrated in FIG. 3, on a bottom surface of the housing 11, a plurality of recessed parts 11x with which locating pins 32a (described later) of the automated guided vehicle 30 are engaged are disposed. The recessed parts 11x are disposed at four apex positions (90° rotationally symmetric positions) of a square constituted of sides along the longitudinal direction and the lateral direction on the bottom surface of the housing 11.

As illustrated in FIG. 2, the grip 12 is a portion gripped by a user, for example. The grip 12 is a stick-shaped member extending in the upper and lower direction. The grips 12 are disposed at positions close to an upper side of a center part in the upper and lower direction at four corners of the housing 11. The shutter 13 is disposed to be able to block the opening 11h of the housing 11. As the shutter 13, for example, a vertical shutter is used, in which slats constituted of long and narrow plate members continuously arranged in a bellows shape are housed in an upper part. The shutter 13 is caused to be in a closed state by pulling down the slats from an upper side to a lower side, and caused to be in an opened state by lifting up the slats from the lower side to the upper side. The casters 14 are disposed at four corners of a lower surface of the housing 11. The casters 14 are configured to rotate 360° about an axis along the upper and lower direction. As the caster 14, for example, a flexible caster is used.

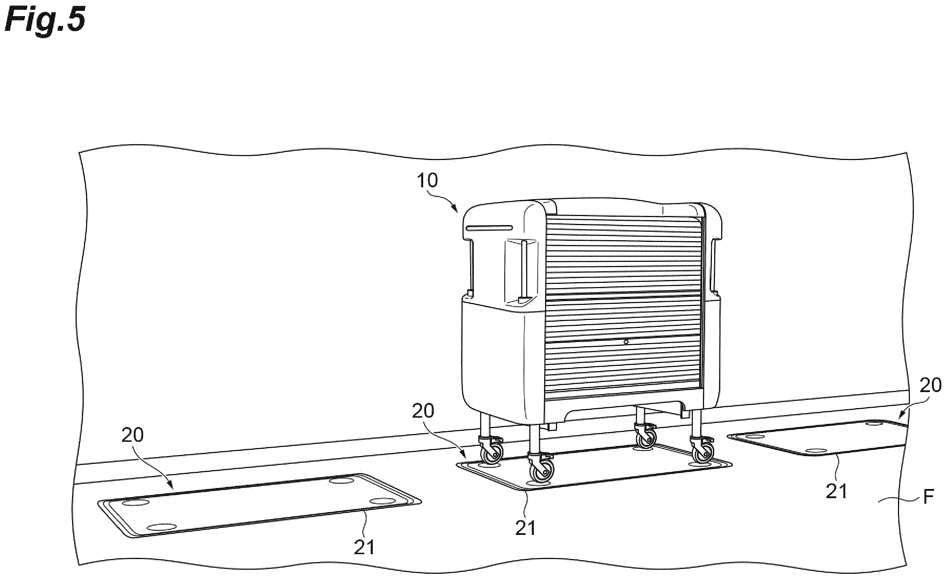

FIG. 5 is a perspective view illustrating the station 20 in FIG. 1. As illustrated in FIG. 5, the station 20 is an area in which the cart 10 is disposed. The station 20 is partitioned by a position marker 21 on a floor F. The station 20 has a rectangular shape corresponding to the cart 10 in plan view. One cart 10 can be disposed at the station 20. A plurality of the stations 20 are disposed in one department D (refer to FIG. 1), for example. The number of the stations 20 disposed in the transport system 1 is not particularly limited.

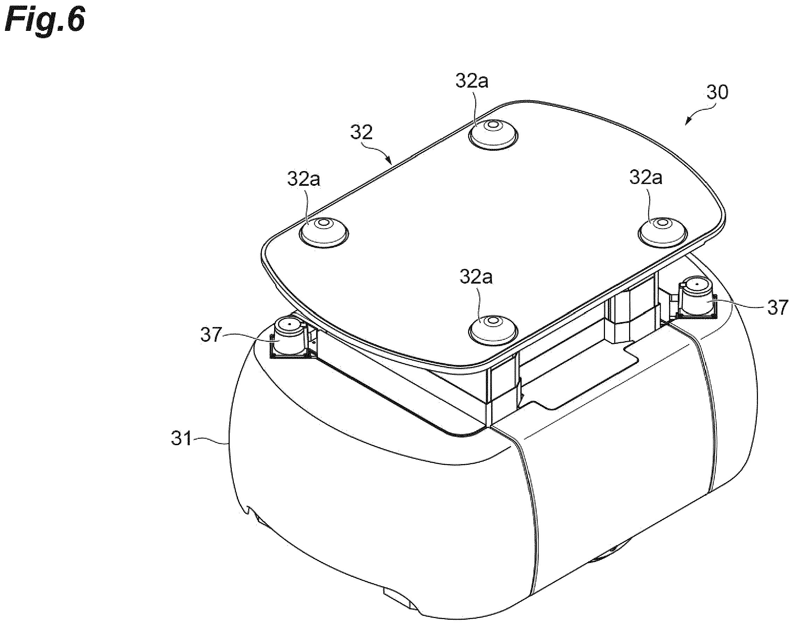

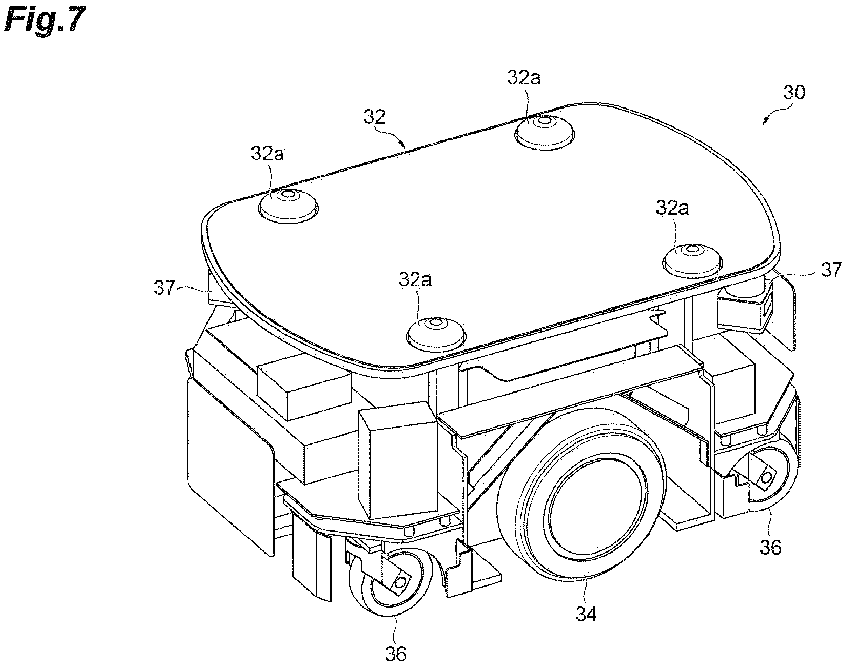

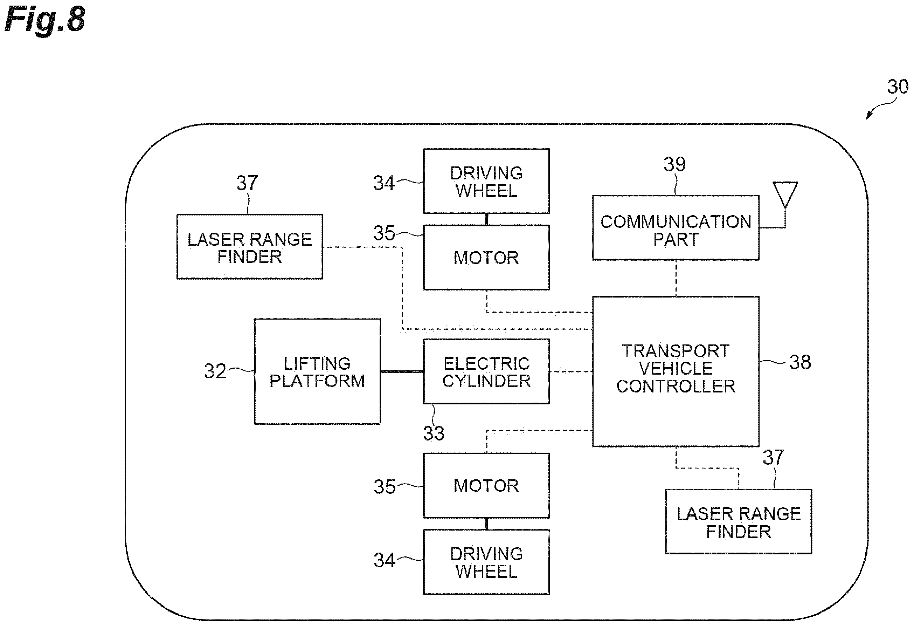

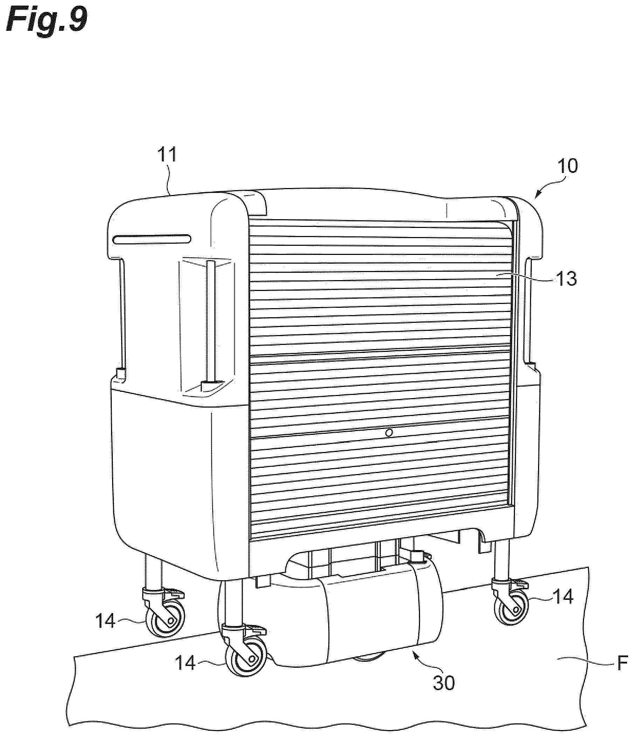

FIG. 6 is a perspective view illustrating the automated guided vehicle 30 in FIG. 1. FIG. 7 is a perspective view illustrating a state in which a cover 31 of the automated guided vehicle 30 in FIG. 1 is removed. FIG. 8 is a block diagram illustrating a configuration of the automated guided vehicle 30 in FIG. 1. FIG. 9 is a perspective view illustrating the cart 10 in the case of being transported by the automated guided vehicle 30 in FIG. 1. As illustrated in FIG. 6, the automated guided vehicle 30 is a transport vehicle configured to self-travel on the floor F along a predetermined traveling route. The automated guided vehicle 30 automatically transports the cart 10 among the stations 20. The predetermined traveling route is a route set in advance, and extends to pass through between the departments D. The predetermined traveling route is set to be close to the stations 20, for example.

The automated guided vehicle 30 employs a two-wheel speed difference system as a driving mechanism. The automated guided vehicle 30 is configured to be able to perform forward movement, backward movement, a left or right turn, and a spin turn (pivot at the present place). The automated guided vehicle 30 has an external shape of a rectangular shape in plan view. For example, the automated guided vehicle 30 has an external shape of a rectangular parallelepiped shape having a width of 500 mm, a length of 700 mm, and a height of 320 mm. The number of the automated guided vehicles 30 used in the transport system 1 is not particularly limited, and may be 50, for example. Hereinafter, the traveling direction of the automated guided vehicle 30 may be simply referred to as a "traveling direction" in some cases. A direction orthogonal to both of the traveling direction and the upper and lower direction is assumed to be a "right and left direction" in the following description.

As illustrated in FIG. 7 and FIG. 8, the automated guided vehicle 30 includes a lifting platform 32, an electric cylinder 33, a driving wheel 34, a motor 35, a driven wheel 36, a laser range finder 37, a transport vehicle controller 38, and a communication part 39.

The lifting platform 32 is a member on which the cart 10 is placed, being configured to be able to be raised or lowered. The lifting platform 32 has a plate shape the thickness direction of which is the upper and lower direction. The lifting platform 32 is disposed on an upper part of the automated guided vehicle 30. The locating pins 32a projecting upward are disposed on an upper surface of the lifting platform 32. The locating pin 32a is a projecting part to be engaged with the recessed part 11x on the bottom surface of the cart 10 placed on the lifting platform 32. An upper part of the locating pin 32a has a tapered shape tapering toward the upper side. The locating pins 32a are disposed at four apex positions (90° rotationally symmetric positions) of a square constituted of sides along the traveling direction and the right and left direction on the upper surface of the lifting platform 32. The lifting platform 32 lifts up the cart 10 from below at the time of being raised, and takes down the cart 10 onto the floor F at the time of being lowered. The electric cylinder 33 is a driving source configured to raise and lower the lifting platform 32. The electric cylinder 33 is connected to the transport vehicle controller 38, and an operation thereof is controlled by the transport vehicle controller 38.

The driving wheel 34 is a wheel configured to drive the automated guided vehicle 30. A pair of the driving wheels 34 is disposed at both end parts in the right and left direction at the center of the automated guided vehicle 30 in the traveling direction. The motor 35 is disposed for each driving wheel 34. That is, a pair of the motors 35 is respectively connected to the pair of driving wheels 34, and the pair of motors 35 independently drives the pair of driving wheels 34. The motor 35 is connected to the transport vehicle controller 38, and an operation thereof is controlled by the transport vehicle controller 38. For example, by rotationally driving the pair of driving wheels 34 at a constant speed in directions different from each other by the pair of motors 35, a spin turn of the automated guided vehicle 30 is enabled.

The driven wheel 36 is a wheel configured not to perform driving, and is a wheel configured to be rotated in response to driving of the driving wheel 34. Two pairs of the driven wheels 36 are disposed. Specifically, the pair of driving wheels 34 is disposed at both end parts in the right and left direction on one side in the longitudinal direction of the automated guided vehicle 30 in the traveling direction, and the pair of driving wheels 34 is disposed at both end parts in the right and left direction on the other side in the longitudinal direction of the automated guided vehicle 30 in the traveling direction. The driven wheel 36 is configured to rotate 360° about the axis along an upper and lower direction, for example.

The laser range finder 37 is a sensor configured to detect a surrounding environment of the automated guided vehicle 30. Laser range finders 37 are disposed on one side and the other side of the automated guided vehicle 30 in the traveling direction. A pair of the laser range finders 37 cooperates with each other to acquire shape data around 360° of the automated guided vehicle 30. The laser range finder 37 is not particularly limited, and various sensors can be used as long as the surrounding environment of the automated guided vehicle 30 can be detected. The laser range finder 37 is connected to the transport vehicle controller 38, and outputs a detection result thereof to the transport vehicle controller 38.

The transport vehicle controller 38 collectively controls the automated guided vehicle 30. The transport vehicle controller 38 is a computer including a central processing unit (CPU), a read only memory (ROM), a random access memory (RAM), and the like. The transport vehicle controller 38 can be configured, for example, as software such that a computer program stored in the ROM is loaded into the RAM to be executed by the CPU. The transport vehicle controller 38 may be configured as hardware such as an electronic circuit. The transport vehicle controller 38 may be configured with a single device, or may be configured with a plurality of devices. If it is configured with a plurality of devices, they are connected via a communication network such as the Internet or an intranet to logically construct a single transport vehicle controller 38.

The transport vehicle controller 38 executes traveling control and loading/unloading control for transporting the cart 10 from the station 20 as a transport source to the station 20 as a transport destination based on a transport command received via the communication part 39 from the system controller 40. In the traveling control, a Simultaneous Localization and Mapping (SLAM) technique is used as a guidance system. In the traveling control, self-position estimation is performed by checking a created environment map against surrounding shape data acquired by the laser range finder 37. In the traveling control, a difference in self-position estimation from a recognized self-position is received as a correction value, and traveling of the automated guided vehicle 30 is controlled along a traveling route from the self-position reflecting the correction value to a target position. In the loading/unloading control, by raising and lowering the lifting platform 32, loading on the automated guided vehicle 30 and unloading from the automated guided vehicle 30 are performed.

The communication part 39 is an appliance configured to perform wireless communication with the outside of the automated guided vehicle 30. The communication part 39 communicates with the system controller 40 via the access point 50. The communication part 39 may include a wireless LAN antenna, for example. In the automated guided vehicle 30, the electric cylinder 33, the driving wheels 34, the motors 35, the driven wheels 36, the laser range finders 37, the transport vehicle controller 38, and the communication part 39 are covered and protected by the cover 31 (refer to FIG. 6).

As illustrated in FIG. 9, the automated guided vehicle 30 as described above gets under the lower part of the cart 10 (between the cart 10 and the floor F) while raising the lifting platform 32 in this state to place the cart 10 on the lifting platform 32 to be lifted up. The automated guided vehicle 30 travels in a state of lifting up the cart 10 from below by the lifting platform 32 (state in which the casters 14 are separated from the floor F), and the cart 10 is transported accordingly. On the other hand, by lowering the lifting platform 32 on which the cart 10 is placed, the automated guided vehicle 30 causes the cart 10 to be grounded on the floor F and takes down the cart 10 from the lifting platform 32.

Returning to FIG. 1, the system controller 40 collectively controls the transport system 1. The system controller 40 is a computer including a CPU, a ROM, and a RAM. The system controller 40 can be configured, for example, as software such that a computer program stored in the ROM is loaded into the RAM to be executed by the CPU. The system controller 40 may be configured as hardware such as an electronic circuit. The system controller 40 may be configured with a single device or a plurality of devices. In the case of being configured with a plurality of devices, they are connected via a communication network such as the Internet or an intranet to logically construct a single system controller 40.

The system controller 40 generates a transport command for causing the automated guided vehicle 30 to transport the cart 10 based on an input (transport request) from a host controller (not illustrated) or the operation terminal 60. The system controller 40 is installed in a server room, for example. The transport command includes a traveling route along which the automated guided vehicle 30 travels. Transport patterns of the transport command include normal transport, circuit transport, and composite transport.

The normal transport is transport of loading the cart 10 on the automated guided vehicle 30 at the station 20 as a transport source, and unloading the cart 10 from the automated guided vehicle 30 at the station 20 as a transport destination. The circuit transport is transport of loading the cart 10 on the automated guided vehicle 30 at the station 20 as a transport source, going around the stations 20 while the cart 10 is loaded thereon, and returning to the station 20 as a transport source thereafter. In the circuit transport, the transport source coincides with the transport destination. The composite transport is transport of loading the cart 10 on the automated guided vehicle 30 at the station 20 as a transport source in a first department, moving to a second department, unloading the cart 10 at the station 20 as a transport destination in the second department, loading the cart 10 on the automated guided vehicle 30 at the other station 20 in the second department, returning to the first department, and unloading the cart 10 at the station 20 as a transport destination in the first department. In the composite transport, after loading is performed on the automated guided vehicle 30 in the second department, the cart 10 may be unloaded at the station 20 as a transport destination in a department other than the first department and the second department.

The system controller 40 selects an optimum one of the automated guided vehicles 30 using a plurality of conditions, and assigns the transport command to the selected automated guided vehicle 30. The conditions for selecting the automated guided vehicle 30 include, for example, the fact that a residual amount of a battery of the automated guided vehicle 30 is equal to or larger than a predetermined value, the fact that a distance from the station 20 as a transport source is the shortest, the fact that the automated guided vehicle 30 is not currently transporting another cart 10, and the like.

The access point 50 is a relay appliance configured to perform wireless communication between the system controller 40 and the automated guided vehicle 30, and wireless communication between the system controller 40 and the operation terminal 60. For example, a frequency band of 2.4 GHz or 5 GHz is used by the access point 50. The access point 50 is connected in a wired manner to the system controller 40 via a cable CB. The number of the access points 50 installed in the transport system 1 is not particularly limited. The access point 50 is disposed on an overhead surface or a wall surface.

The operation terminal 60 is a terminal configured to receive an input from an operator. The operation terminal 60 includes a touch panel. Via the operation terminal 60, the cart 10 as a transport target is input, the station 20 as a transport source is input, and the station 20 as a transport destination is input, for example. The operation terminal 60 is installed for each department. As the operation terminal 60, a portable terminal such as a tablet terminal is used.

In the transport system 1 according to the present embodiment, the automated guided vehicle 30 has a total length of a vehicle body shorter than a dimension in the longitudinal direction of the cart 10 in plan view, and a vehicle body width shorter than a dimension in the lateral direction of the cart 10 in plan view. In other words, a size in the longitudinal direction of the automated guided vehicle 30 is smaller than a size in the longitudinal direction of the cart 10, and a size in the lateral direction of the automated guided vehicle 30 is smaller than a size in the lateral direction of the cart 10. By controlling driving of each of the pair of motors 35 by the transport vehicle controller 38, the automated guided vehicle 30 performs a first traveling direction change operation, a second traveling direction change operation, an entry operation, and a coming-out operation.

The first traveling direction change operation is an operation of changing the traveling direction so that the traveling direction is in parallel with the longitudinal direction of the cart 10 in a state in which the automated guided vehicle 30 gets under the lower part of the cart 10. The second traveling direction change operation is an operation of changing the traveling direction so that the traveling direction is in parallel with the lateral direction of the cart 10 in a state in which the automated guided vehicle 30 gets under the lower part of the cart 10. In the first traveling direction change operation and the second traveling direction change operation, for example, control is performed by the transport vehicle controller 38 so that directions of rotational driving of the pair of motors 35 are caused to be opposite to each other, and the pair of driving wheels 34 is rotated at a constant speed in rotational directions opposite to each other. Due to this, a spin turn is performed such that the automated guided vehicle 30 is pivoted at the present place without forward movement and backward movement.

In the spin turn, for example, the automated guided vehicle 30 may be pivoted by 90°. In the spin turn, for example, a positional relation between a reflector (not illustrated) disposed on the cart 10 and the automated guided vehicle 30 may be grasped based on a detection result of the laser range finder 37, and the automated guided vehicle 30 may be pivoted by an angle with which the traveling direction becomes in parallel with the longitudinal direction or the lateral direction of the cart 10 based on the positional relation.

The entry operation is an operation in which the automated guided vehicle 30 enters the lower part of the cart 10 from one side or the other side in the lateral direction of the cart 10 to get under the lower part of the cart 10. In other words, the entry operation is an operation in which the automated guided vehicle 30 enters the lower part of the cart 10 from a long side of the cart 10 to get under the lower part of the cart 10. The coming-out operation is an operation in which the automated guided vehicle 30 being under the lower part of the cart 10 comes out from one side or the other side in the lateral direction of the lower part of the cart 10. In other words, the coming-out operation is an operation in which the automated guided vehicle 30 being under the lower part of the cart 10 comes out from the long side of the lower part of the cart 10 to the outside of the lower part of the cart 10.

In the transport system 1 according to the present embodiment, in a case in which the transport command is assigned to the automated guided vehicle 30 and an obstacle B is present around the station 20 as a transport source of the transport command, the automated guided vehicle 30 performs an operation described below at the time of carrying out the cart 10 from the station 20. Herein, the station 20 as a transport source has a configuration in which one side and the other side in the longitudinal direction of the station 20 are blocked by obstacles B, and the automated guided vehicle 30 cannot enter from the longitudinal direction. Whether the obstacle B is present around the station 20 can be determined, for example, based on information about each station 20, which is stored in advance in the system controller 40 (the same applies to the following description).

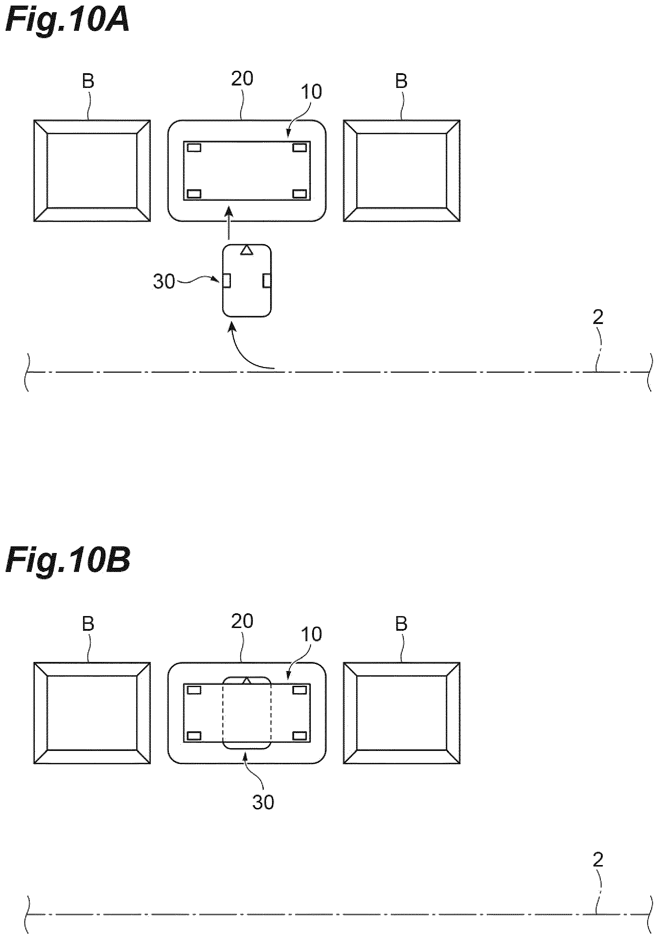

First, as illustrated in FIG. 10(a), driving of each of the pair of motors 35 is controlled by the transport vehicle controller 38, and the automated guided vehicle 30 travels from a predetermined traveling route 2 toward the station 20. Thereafter, as illustrated in FIG. 10(b), driving of each of the pair of motors 35 is controlled by the transport vehicle controller 38, and the automated guided vehicle 30 performs the entry operation to enter the lower part of the cart 10 disposed at the station 20.

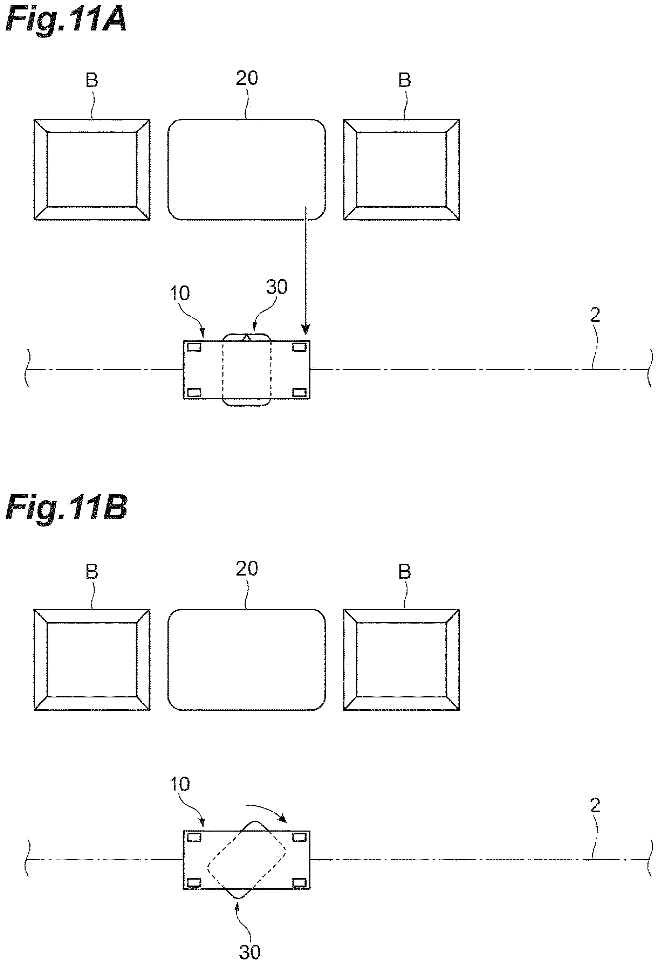

Subsequently, driving of the electric cylinder 33 is controlled by the transport vehicle controller 38 to raise the lifting platform 32, and the automated guided vehicle 30 places the cart 10 on the lifting platform 32 to lift it up. Due to this, the automated guided vehicle 30 is connected to the cart 10. At this point, the longitudinal direction of the cart 10 is orthogonal to the longitudinal direction (traveling direction) of the automated guided vehicle 30, and a front end and a rear end of the automated guided vehicle 30 protrude from the cart 10 in plan view. Thereafter, as illustrated in FIG. 11(a), driving of each of the pair of motors 35 is controlled by the transport vehicle controller 38, the automated guided vehicle 30 travels along the lateral direction of the station 20 together with the lifted cart 10 to be separated from the station 20, and comes out from the station 20 to the predetermined traveling route 2.

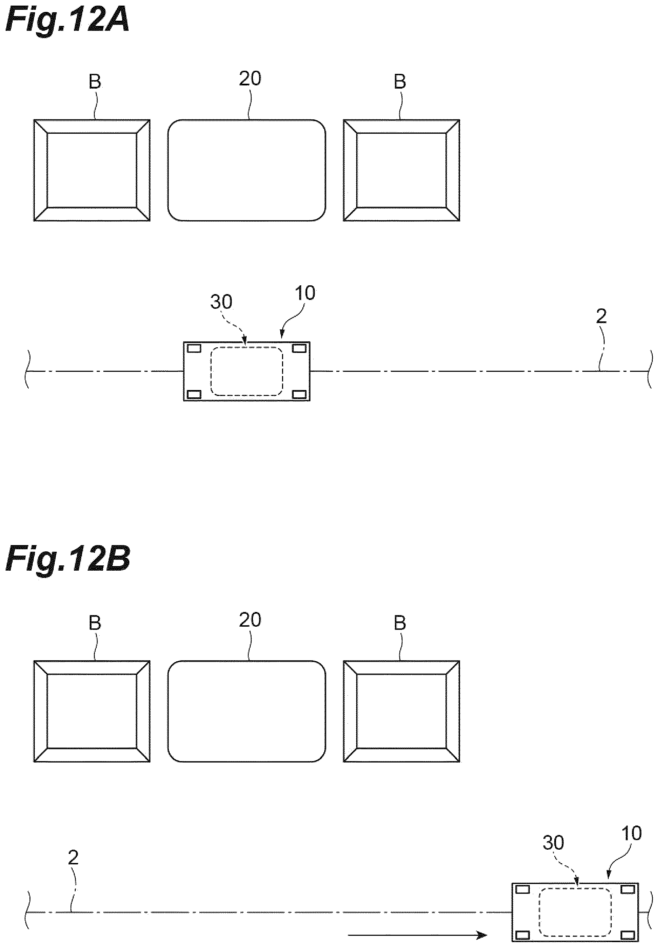

Subsequently, driving of the electric cylinder 33 is controlled by the transport vehicle controller 38 to lower the lifting platform 32, and the automated guided vehicle 30 takes down the cart 10 from the lifting platform 32 to the floor F. Due to this, the automated guided vehicle 30 is disconnected from the cart 10. Thereafter, as illustrated in FIG. 11(b), driving of each of the pair of motors 35 is controlled by the transport vehicle controller 38, and the automated guided vehicle 30 performs the first traveling direction change operation. Due to this, the automated guided vehicle 30 performs a spin turn in a state in which the automated guided vehicle 30 is being under the lower part of the cart 10, and the traveling direction is changed to be in parallel with the longitudinal direction of the cart 10 (first traveling direction change step). At this point, as illustrated in FIG. 12(a), the automated guided vehicle 30 is encompassed (completely hidden) by the cart 10 in plan view.

Subsequently, driving of the electric cylinder 33 is controlled by the transport vehicle controller 38 to raise the lifting platform 32, and the automated guided vehicle 30 places the cart 10 on the lifting platform 32 to lift it up. Due to this, the automated guided vehicle 30 is connected to the cart 10 again. As illustrated in FIG. 12(b), driving of each of the pair of motors 35 is then controlled by the transport vehicle controller 38, and the automated guided vehicle 30 travels toward the transport destination along the predetermined traveling route 2 together with the connected cart 10.

In the transport system 1 according to the present embodiment, in a case in which the transport command is assigned to the automated guided vehicle 30 and the obstacle B is not present around the station 20 as a transport source of the transport command, the automated guided vehicle 30 performs an operation described below at the time of carrying out the cart 10 from the station 20. Herein, the station 20 as a transport source has a configuration in which one side and the other side in the longitudinal direction of the station 20 are not blocked, and the automated guided vehicle 30 can enter from the longitudinal direction.

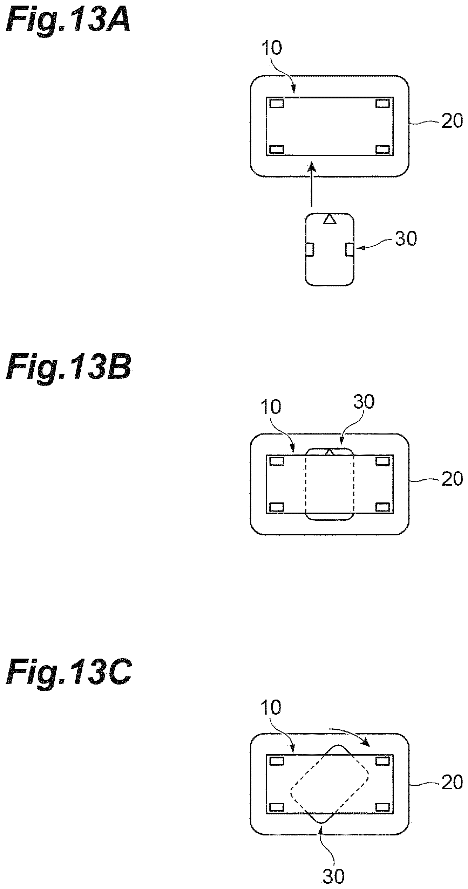

First, as illustrated in FIG. 13(a), driving of each of the pair of motors 35 is controlled by the transport vehicle controller 38, and the automated guided vehicle 30 travels toward the station 20. Thereafter, as illustrated in FIG. 13(b), driving of each of the pair of motors 35 is controlled by the transport vehicle controller 38, and the automated guided vehicle 30 performs the entry operation to enter the lower part of the cart 10 disposed at the station 20.

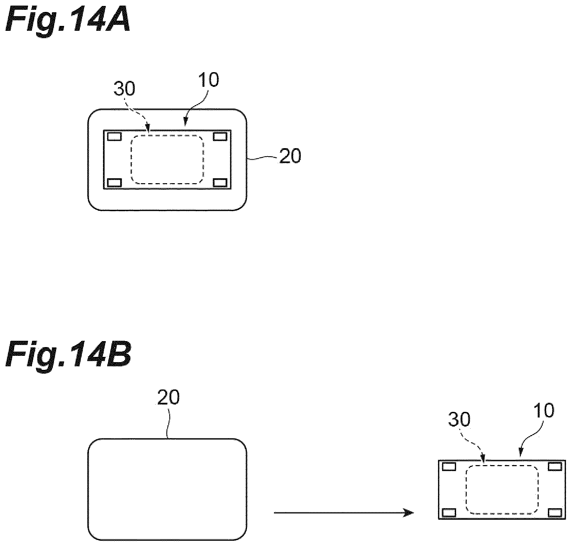

Subsequently, as illustrated in FIG. 13(c), driving of each of the pair of motors 35 is controlled by the transport vehicle controller 38, and the automated guided vehicle 30 performs the first traveling direction change operation. Due to this, the automated guided vehicle 30 performs a spin turn in a state in which the automated guided vehicle 30 is being under the lower part of the cart 10, and the traveling direction is changed to be in parallel with the longitudinal direction of the cart 10 (first traveling direction change step). At this point, as illustrated in FIG. 14(a), the automated guided vehicle 30 is encompassed by the cart 10 in plan view.

Subsequently, driving of the electric cylinder 33 is controlled by the transport vehicle controller 38 to raise the lifting platform 32, and the automated guided vehicle 30 places the cart 10 on the lifting platform 32 to lift it up. Due to this, the automated guided vehicle 30 is connected to the cart 10. Thereafter, as illustrated in FIG. 14(b), driving of each of the pair of motors 35 is controlled by the transport vehicle controller 38, and the automated guided vehicle 30 travels in the longitudinal direction of the station 20 together with the connected cart 10 to come out from the station 20. Driving of each of the pair of motors 35 is then controlled by the transport vehicle controller 38, and the automated guided vehicle 30 travels toward the transport destination together with the connected cart 10. Thereafter, the cart 10 and the automated guided vehicle 30 travel while smoothly changing orientations thereof along the predetermined traveling route 2.

In the transport system 1 according to the present embodiment, in a case in which the transport command is assigned to the automated guided vehicle 30 and the obstacle B is present around the station 20 as a transport destination of the transport command, the automated guided vehicle 30 performs an operation described below at the time of carrying the cart 10 into the station 20. Herein, the station 20 as a transport source has a configuration in which one side and the other side in the longitudinal direction of the station 20 are blocked by the obstacles B, and the automated guided vehicle 30 cannot enter from the longitudinal direction.

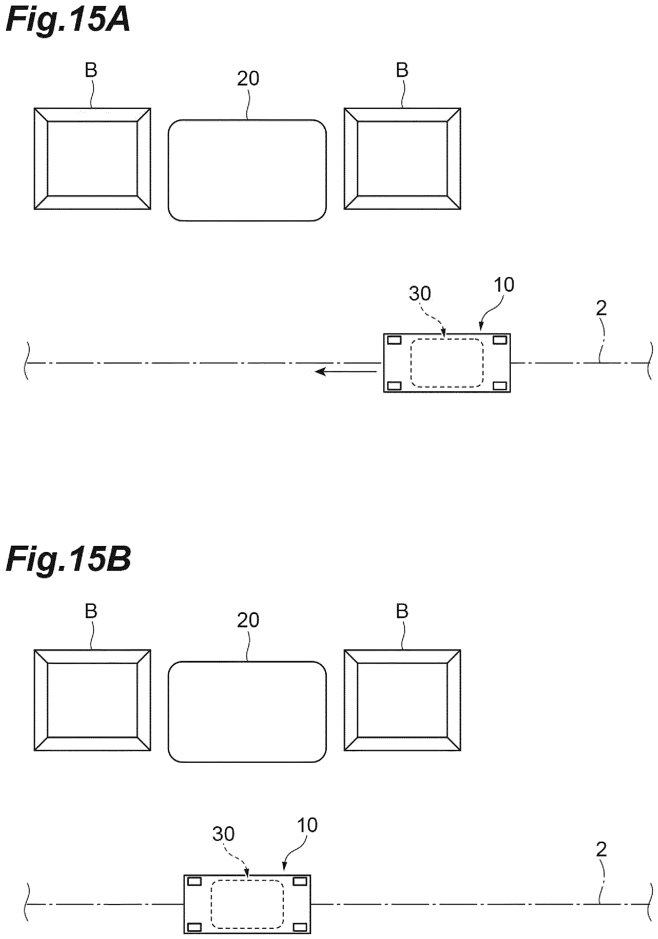

First, as illustrated in FIG. 15(a), the automated guided vehicle 30 travels along the predetermined traveling route 2 together with the cart 10 connected to the automated guided vehicle 30, and stops at a position close to the station 20 as illustrated in FIG. 15(b). At this point, the cart 10 is transported so that the longitudinal direction thereof is in parallel with the traveling direction. A stop position of the automated guided vehicle 30 is not particularly limited, but is a position where a line connecting the center of the station 20 with the center of the cart 10 is orthogonal to the predetermined traveling route 2.

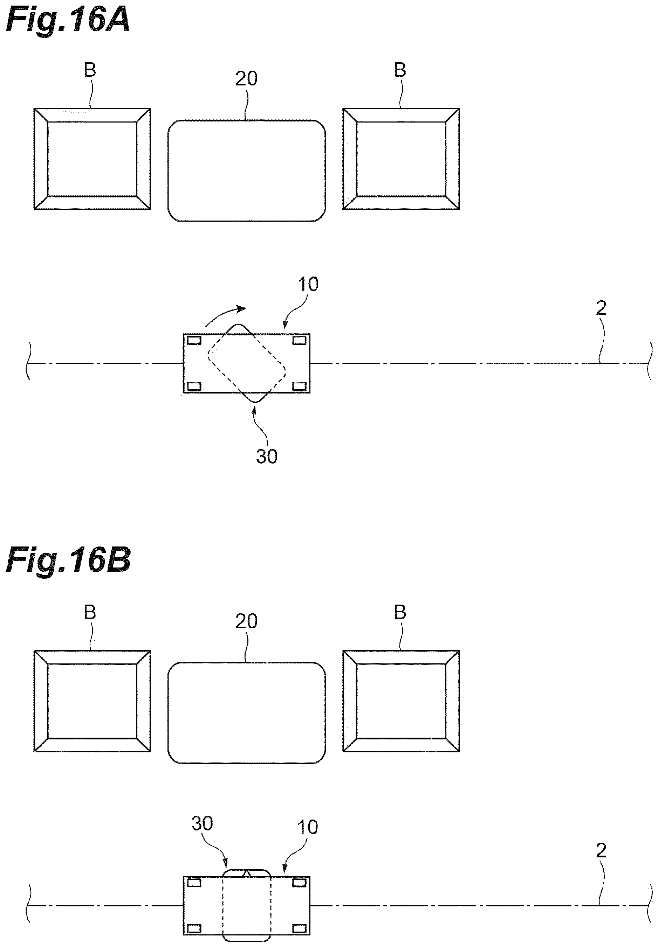

Subsequently, driving of the electric cylinder 33 is controlled by the transport vehicle controller 38 to lower the lifting platform 32, and the automated guided vehicle 30 takes down the cart 10 from the lifting platform 32 to the floor F. Due to this, the automated guided vehicle 30 is disconnected from the cart 10. Thereafter, as illustrated in FIG. 16(a), driving of each of the pair of motors 35 is controlled by the transport vehicle controller 38, and the automated guided vehicle 30 performs the second traveling direction change operation. Due to this, as illustrated in FIG. 16(b), the automated guided vehicle 30 performs a spin turn in a state in which the automated guided vehicle 30 is being under the lower part of the cart 10, and the traveling direction is changed to be in parallel with the lateral direction of the cart 10 (second traveling direction change step). At this point, the front end and the rear end of the automated guided vehicle 30 protrude from the cart 10 in plan view.

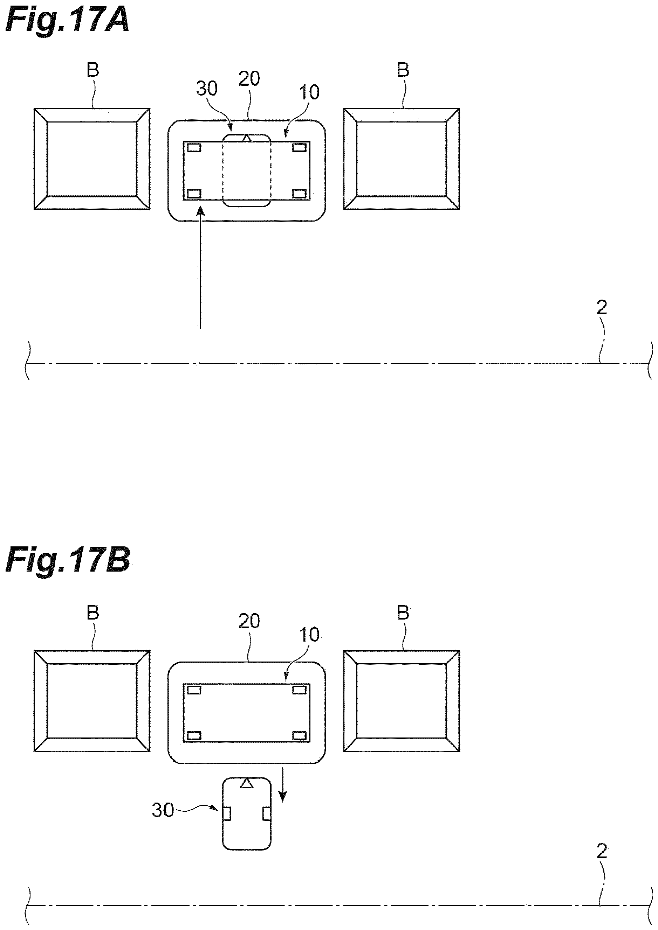

Subsequently, driving of the electric cylinder 33 is controlled by the transport vehicle controller 38 to raise the lifting platform 32, and the automated guided vehicle 30 places the cart 10 on the lifting platform 32 to lift it up. Due to this, the automated guided vehicle 30 is connected to the cart 10 again. Thereafter, as illustrated in FIG. 17(a), driving of each of the pair of motors 35 is controlled by the transport vehicle controller 38, and the automated guided vehicle 30 travels toward the station 20 along the lateral direction of the station 20 together with the connected cart 10 to enter the station 20.

Subsequently, driving of the electric cylinder 33 is controlled by the transport vehicle controller 38 to lower the lifting platform 32, and the automated guided vehicle 30 takes down the cart 10 from the lifting platform 32 to the floor F in the station 20. Due to this, the automated guided vehicle 30 is disconnected from the cart 10, and the cart 10 is completely carried into the station 20. Subsequently, as illustrated in FIG. 17(b), driving of each of the pair of motors 35 is controlled by the transport vehicle controller 38, and the automated guided vehicle 30 performs the coming-out operation to come out from the lower side of the cart 10 and the station 20. Thereafter, for example, another command is assigned to the automated guided vehicle 30 by the system controller 40.

In the transport system 1 according to the present embodiment, in a case in which the transport command is assigned to the automated guided vehicle 30 and the obstacle B is not present around the station 20 as a transport destination of the transport command, the automated guided vehicle 30 performs an operation described below at the time of carrying out the cart 10 from the station 20. Herein, the station 20 as a transport destination has a configuration in which one side and the other side in the longitudinal direction of the station 20 are not blocked, and the automated guided vehicle 30 can enter from the longitudinal direction.

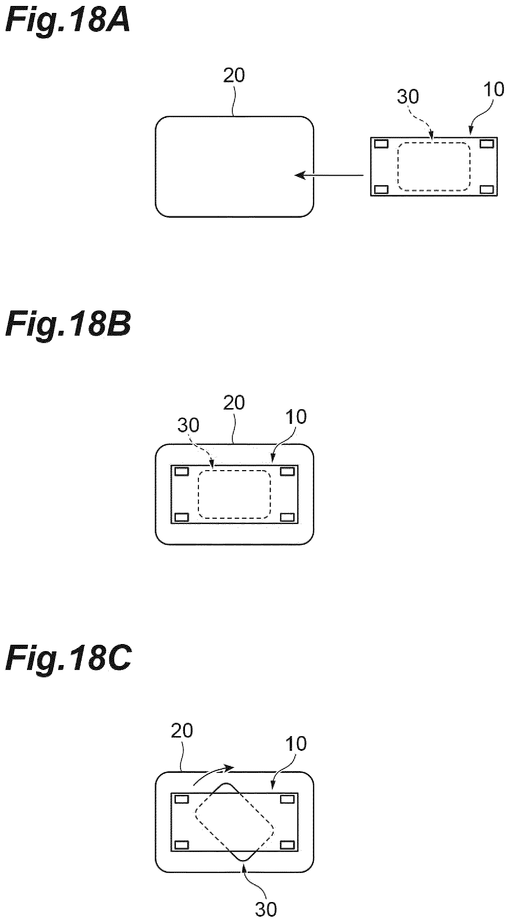

First, as illustrated in FIG. 18(a), driving of each of the pair of motors 35 is controlled by the transport vehicle controller 38, and the automated guided vehicle 30 travels from the predetermined traveling route 2 toward the station 20 while smoothly changing the orientation thereof together with the cart 10 connected to the automated guided vehicle 30 to enter the station 20 in parallel therewith as illustrated in FIG. 18(b). Thereafter, driving of the electric cylinder 33 is controlled by the transport vehicle controller 38 to lower the lifting platform 32, and the automated guided vehicle 30 takes down the cart 10 from the lifting platform 32 to the floor F. Due to this, the automated guided vehicle 30 is disconnected from the cart 10.

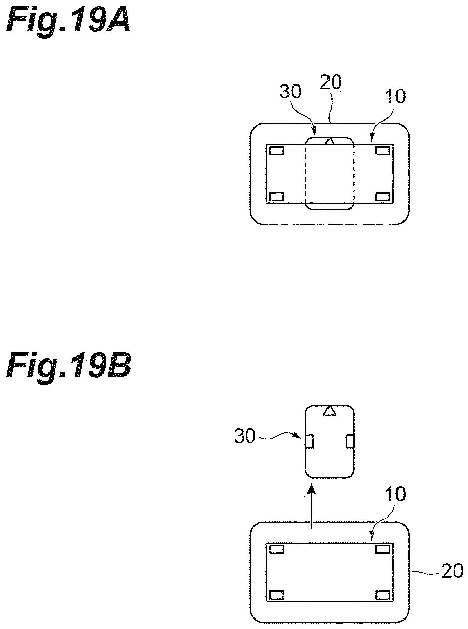

Subsequently, as illustrated in FIG. 18(c), driving of each of the pair of motors 35 is controlled by the transport vehicle controller 38, and the automated guided vehicle 30 performs the second traveling direction change operation. Due to this, as illustrated in FIG. 19(a), the automated guided vehicle 30 performs a spin turn in a state in which the automated guided vehicle 30 is being under the lower part of the cart 10, and the traveling direction is changed to be in parallel with the lateral direction of the cart 10 (second traveling direction change step). Subsequently, as illustrated in FIG. 19(b), driving of each of the pair of motors 35 is controlled by the transport vehicle controller 38, and the automated guided vehicle 30 performs the coming-out operation to come out from the lower side of the cart 10 and the station 20. Thereafter, for example, another command is assigned to the automated guided vehicle 30 by the system controller 40.

As described above, in the transport system 1, the longitudinal direction of the cart 10 transported by the automated guided vehicle 30 can be caused to be in parallel with the traveling direction by the first traveling direction change operation. Thus, for example, even in the case of the automated guided vehicle 30 traveling in a narrow passage, a length of the cart 10 in a width direction of the passage can be reduced. As a result, the automated guided vehicle 30 that is transporting the cart 10 can be prevented from hindering traffic.

In the transport system 1, the automated guided vehicle 30 performs the entry operation of entering the lower part of the cart 10 from one side or the other side in the lateral direction. Due to this, the automated guided vehicle 30 can smoothly enter the lower part of the cart 10.

In the transport system 1, in the case of carrying out the cart 10 from the station 20 around which the obstacle B is not present, the automated guided vehicle 30 performs the entry operation of entering the lower part of the cart 10 disposed at the station 20, performs the first traveling direction change operation, makes connection with the cart 10 by raising the lifting platform 32 and placing the cart 10 on the lifting platform 32, and comes out from the station 20 together with the cart 10. In this case, in the transport system 1, while the longitudinal direction of the cart 10 transported by the automated guided vehicle 30 is caused to be in parallel with the traveling direction, the cart 10 can be easily carried out from the station 20 around which no obstacle is present.

In the transport system 1, in the case of carrying out the cart 10 from the station 20 around which the obstacle B is present, the automated guided vehicle 30 performs the entry operation of entering the lower part of the cart 10 disposed at the station 20, makes connection with the cart 10 by raising the lifting platform 32 and placing the cart 10 on the lifting platform 32, comes out from the station 20 together with the cart 10, disconnects the cart 10 by lowering the lifting platform 32 and taking down the cart 10 from the lifting platform 32, performs the first traveling direction change operation, and makes connection with the cart 10 by raising the lifting platform 32 and placing the cart 10 on the lifting platform 32. In this case, in the transport system 1, at the time of carrying out the cart 10 from the station 20, the automated guided vehicle 30 can change a holding manner for the transported cart 10. While the longitudinal direction of the cart 10 transported by the automated guided vehicle 30 is caused to be in parallel with the traveling direction, the cart 10 can be easily carried out from the station 20 around which the obstacle B is present. The station 20 is not limited to a station in which one side or the other side in the longitudinal direction is opened, so that a degree of freedom of a disposition place of the station 20 can be enhanced.

In the transport system 1, the automated guided vehicle 30 performs the second traveling direction change operation of changing the traveling direction of the automated guided vehicle 30 so that the traveling direction of the automated guided vehicle 30 is in parallel with the lateral direction of the cart 10 in a state of being under the lower part of the cart 10. Due to this, the automated guided vehicle 30 can easily carry the cart 10 into the station 20 of various aspects by using the second traveling direction change operation.

In the transport system 1, the automated guided vehicle 30 performs the coming-out operation of coming out from one side or the other side in the lateral direction of the lower part of the cart 10. Due to this, the automated guided vehicle 30 can smoothly come out from the lower part of the cart 10.

In the transport system 1, in the case of the automated guided vehicle 30 connected to the cart 10 by placing the cart 10 on the lifting platform 32 so that the traveling direction of the automated guided vehicle 30 is in parallel with the longitudinal direction of the cart 10, such an automated guided vehicle 30 carries the cart 10 into the station 20 around which the obstacle B is not present, the automated guided vehicle 30 enters the station 20 together with the cart 10, disconnects the cart 10 by lowering the lifting platform 32 and taking down the cart 10 from the lifting platform 32, performs the second traveling direction change operation, and performs the coming-out operation to come out from the station 20. In this case, in the transport system 1, while the longitudinal direction of the cart 10 transported by the automated guided vehicle 30 is caused to be in parallel with the traveling direction, the cart 10 can be easily carried into the station 20 around which the obstacle B is not present.

In the transport system 1, in the case of the automated guided vehicle 30 connected to the cart 10 by placing the cart 10 on the lifting platform 32 so that the traveling direction of the automated guided vehicle 30 is in parallel with the longitudinal direction of the cart 10, such an automated guided vehicle 30 carries the cart 10 into the station 20 around which the obstacle B is present, the automated guided vehicle 30 may disconnect the cart 10 by lowering the lifting platform 32 and taking down the cart 10 from the lifting platform 32, perform the second traveling direction change operation, make connection with the cart 10 by raising the lifting platform 32 and placing the cart 10 on the lifting platform 32, enter the station 20 together with the cart 10, disconnect the cart 10 by lowering the lifting platform 32 and taking down the cart 10 from the lifting platform 32, and perform the coming-out operation to come out from the station 20. In this case, in the transport system 1, at the time of carrying the cart 10 into the station 20, the automated guided vehicle 30 can change a holding manner for the transported cart 10. While the longitudinal direction of the cart 10 transported by the automated guided vehicle 30 is caused to be in parallel with the traveling direction, the cart 10 can be easily carried into the station 20 around which the obstacle B is present. The station 20 is not limited to a station in which one side or the other side in the lateral direction is opened, so that a degree of freedom of a disposition place of the station 20 can be enhanced.

In the first traveling direction change operation, the transport system 1 performs a spin turn of pivoting the automated guided vehicle 30 at the present place. In this case, the traveling direction of the automated guided vehicle 30 can be caused to be in parallel with the longitudinal direction of the cart 10 by using the spin turn. In the second traveling direction change operation, the transport system 1 performs a spin turn of pivoting the automated guided vehicle 30 at the present place. In this case, the traveling direction of the automated guided vehicle 30 can be caused to be in parallel with the lateral direction of the cart 10 by using the spin turn. In the transport system 1, the transported object is the cart 10. The effect described above can be exhibited in the transport system 1 in which the cart 10 is transported by the automated guided vehicle 30.

The automated guided vehicle 30 can cause the longitudinal direction of the transported cart 10 to be in parallel with the traveling direction by the first traveling direction change operation. Thus, for example, even in the case of the automated guided vehicle 30 traveling in a narrow passage, a length of the cart 10 in a width direction of the passage can be reduced. As a result, the automated guided vehicle 30 that is transporting the cart 10 can be prevented from hindering traffic.

In the method for controlling the automated guided vehicle 30, the longitudinal direction of the cart 10 transported by the automated guided vehicle 30 can be caused to be in parallel with the traveling direction at the first traveling direction change step. Thus, for example, even in the case of the automated guided vehicle 30 traveling in a narrow passage, a length of the cart 10 in a width direction of the passage can be reduced. As a result, the automated guided vehicle 30 that is transporting the cart 10 can be prevented from hindering traffic.

In a state in which the cart 10 is placed on the lifting platform 32 of the automated guided vehicle 30, in the case of the locating pins 32a of the automated guided vehicle 30 being engaged with the recessed parts 11x of the cart 10, the automated guided vehicle 30 and the cart 10 can be positioned and sliding in the lateral direction can be suppressed. The locating pins 32a and the recessed parts 11x are disposed at symmetric positions in a forward and backward direction and a left and right direction (90° rotationally symmetric positions), so that they can be engaged with each other all times in the case of the automated guided vehicle 30 being oriented in any of the forward and backward direction and the left and right direction of the cart 10.

Although the embodiment has been described above, an aspect of the present invention is not limited to the embodiment, and various modifications may be made within the scope not departing from the gist of the invention.

In the embodiment described above, the first traveling direction change operation is performed on the predetermined traveling route 2, but the embodiment is not limited thereto. The first traveling direction change operation may be performed during a period from when the automated guided vehicle 30 enters the station 20 from the predetermined traveling route 2 until the automated guided vehicle 30 returns to the predetermined traveling route 2 from the station 20. For example, the automated guided vehicle 30 may perform the first traveling direction change operation at a position between the station 20 and the predetermined traveling route 2, and return to the predetermined traveling route 2 together with the connected cart 10 to travel along the predetermined traveling route 2 toward the transport destination thereafter. In this case, after the automated guided vehicle 30 enters the station 20 and returns to the predetermined traveling route 2, the first traveling direction change operation has been already performed and the longitudinal direction of the cart 10 is in parallel with the traveling direction, so that the automated guided vehicle 30 can be securely prevented from hindering traffic on the predetermined traveling route 2.

In the embodiment described above, the cart 10 is provided as the transported object. However, the transported object is not particularly limited, and may be various objects. In the embodiment described above, the transport system 1 is applied to automatic transportation of the cart 10 among the departments D, but a field to which an aspect of the present invention is applied is not particularly limited. An aspect of the present invention can be applied to various fields.

The materials and shapes of the respective configurations in the embodiment and the modifications above are not limited to those described above, and various materials and shapes can be used. Each configuration in the embodiment or the modifications above may be optionally applied to each configuration in other embodiments or modifications. Some of the respective configurations in the embodiment or the modifications above may be omitted as appropriate within the scope not departing from the gist of an aspect of the present invention.

The following describes structural elements of an aspect of the present invention.

### <Invention 1>

A transport system including:
a transported object having a long shape in plan view;
a station at which the transported object is disposed; and
an automated guided vehicle including a lifting platform on which the transported object is placed, the automated guided vehicle being configured to self-travel along a predetermined traveling route, wherein
the automated guided vehicle
   has a total length of a vehicle body shorter than a dimension in a longitudinal direction of the transported object in plan view, and a vehicle body width shorter than a dimension in a lateral direction of the transported object in plan view, and
   performs a first traveling direction change operation of changing a traveling direction of the automated guided vehicle so that the traveling direction of the automated guided vehicle is in parallel with the longitudinal direction of the transported object in a state of being under a lower part of the transported object.

### <Invention 2>

The transport system according to Invention 1, wherein the first traveling direction change operation is performed during a period from when the automated guided vehicle enters the station from the predetermined traveling route until the automated guided vehicle returns to the predetermined traveling route from the station.

### <Invention 3>

The transport system according to Invention 1 or 2, wherein the automated guided vehicle performs an entry operation of entering the lower part of the transported object from one side or the other side in the lateral direction.

### <Invention 4>

The transport system according to Invention 3, wherein, in the case of carrying out the transported object from the station, the automated guided vehicle
performs the entry operation of entering the lower part of the transported object disposed at the station,
performs the first traveling direction change operation,
makes connection with the transported object by raising the lifting platform and placing the transported object on the lifting platform, and
comes out from the station together with the transported object.

### <Invention 5>

The transport system according to Invention 3, wherein, in the case of carrying out the transported object from the station, the automated guided vehicle
performs the entry operation of entering the lower part of the transported object disposed at the station,
makes connection with the transported object by raising the lifting platform and placing the transported object on the lifting platform,
comes out from the station together with the transported object,
disconnects the transported object by lowering the lifting platform and taking down the transported object from the lifting platform,
performs the first traveling direction change operation, and
makes connection with the transported object by raising the lifting platform and placing the transported object on the lifting platform.

### <Invention 6>

The transport system according to any one of Inventions 1 to 5, wherein a spin turn is performed to pivot the automated guided vehicle at a present place in the first traveling direction change operation.

### <Invention 7>

The transport system according to any one of Inventions 1 to 6, wherein the automated guided vehicle performs a second traveling direction change operation of changing the traveling direction of the automated guided vehicle so that the traveling direction of the automated guided vehicle is in parallel with the lateral direction of the transported object in a state of being under the lower part of the transported object.

### <Invention 8>

The transport system according to Invention 7, wherein the automated guided vehicle performs a coming-out operation of coming out from one side or the other side in the lateral direction of the lower part of the transported object.

### <Invention 9>

The transport system according to Invention 8, wherein, in the case of the automated guided vehicle connected to the transported object by placing the transported object on the lifting platform so that the traveling direction of the automated guided vehicle is in parallel with the longitudinal direction of the transported object, the automated guided vehicle carries the transported object into the station, and the automated guided vehicle
enters the station together with the transported object, disconnects the transported object by lowering the lifting platform and taking down the transported object from the lifting platform,
performs the second traveling direction change operation, and
performs the coming-out operation to come out from the station.

### <Invention 10>

The transport system according to Invention 8, wherein, in the case of the automated guided vehicle connected to the transported object by placing the transported object on the lifting platform so that the traveling direction of the automated guided vehicle is in parallel with the longitudinal direction of the transported object, the automated guided vehicle carries the transported object into the station, and the automated guided vehicle
disconnects the transported object by lowering the lifting platform and taking down the transported object from the lifting platform,
performs the second traveling direction change operation,
makes connection with the transported object by raising the lifting platform and placing the transported object on the lifting platform,
enters the station together with the transported object,
disconnects the transported object by lowering the lifting platform and taking down the transported object from the lifting platform, and
performs the coming-out operation to come out from the station.

### <Invention 11>

The transport system according to any one of Inventions 7 to 10, wherein a spin turn is performed to pivot the automated guided vehicle at a present place in the second traveling direction change operation.

### <Invention 12>

The transport system according to any one of Inventions 1 to 11, wherein the transported object is a cart configured to carry articles.

### <Invention 13>

An automated guided vehicle including a lifting platform on which a transported object having a long shape in plan view is placed, the automated guided vehicle being configured to self-travel along a predetermined traveling route, wherein
the automated guided vehicle
has a total length of a vehicle body shorter than a dimension in a longitudinal direction of the transported object in plan view, and a vehicle body width shorter than a dimension in a lateral direction of the transported object in plan view, and
performs a first traveling direction change operation of changing a traveling direction of the automated guided vehicle so that the traveling direction of the automated guided vehicle is in parallel with the longitudinal direction of the transported object in a state of being under a lower part of the transported object.

### <Invention 14>

A method for controlling an operation of an automated guided vehicle including a lifting platform on which a transported object having a long shape in plan view is placed, the automated guided vehicle being configured to self-travel along a predetermined traveling route, wherein
the automated guided vehicle has a total length of a vehicle body shorter than a dimension in a longitudinal direction of the transported object in plan view, and a vehicle body width shorter than a dimension in a lateral direction of the transported object in plan view, and
the method includes a first traveling direction change step of changing a traveling direction of the automated guided vehicle so that the traveling direction of the automated guided vehicle is in parallel with the longitudinal direction of the transported object in a state in which the automated guided vehicle is under a lower part of the transported object.

### Reference Signs List

- 1: TRANSPORT SYSTEM
- 2: PREDETERMINED TRAVELING ROUTE
- 10: CART (TRANSPORTED OBJECT)
- 20: STATION
- 30: AUTOMATED GUIDED VEHICLE
- 32: LIFTING PLATFORM

## Claims

1. A transport system comprising:
a transported object having a long shape in plan view;
a station at which the transported object is disposed; and
an automated guided vehicle including a lifting platform on which the transported object is placed, the automated guided vehicle being configured to self-travel along a predetermined traveling route, wherein
the automated guided vehicle
has a total length of a vehicle body shorter than a dimension in a longitudinal direction of the transported object in plan view, and a vehicle body width shorter than a dimension in a lateral direction of the transported object in plan view, and
performs a first traveling direction change operation of changing a traveling direction of the automated guided vehicle so that the traveling direction of the automated guided vehicle is in parallel with the longitudinal direction of the transported object in a state of being under a lower part of the transported object.

2. The transport system according to claim 1, wherein the first traveling direction change operation is performed during a period from when the automated guided vehicle enters the station from the predetermined traveling route until the automated guided vehicle returns to the predetermined traveling route from the station.

3. The transport system according to claim 1 or 2, wherein the automated guided vehicle performs an entry operation of entering the lower part of the transported object from one side or the other side in the lateral direction.

4. The transport system according to claim 3, wherein, in the case of carrying out the transported object from the station, the automated guided vehicle
performs the entry operation of entering the lower part of the transported object disposed at the station,
performs the first traveling direction change operation,
makes connection with the transported object by raising the lifting platform and placing the transported object on the lifting platform, and
comes out from the station together with the transported object.

5. The transport system according to claim 3, wherein, in the case of carrying out the transported object from the station, the automated guided vehicle
performs the entry operation of entering the lower part of the transported object disposed at the station,
makes connection with the transported object by raising the lifting platform and placing the transported object on the lifting platform,
comes out from the station together with the transported object,
disconnects the transported object by lowering the lifting platform and taking down the transported object from the lifting platform,
performs the first traveling direction change operation, and
makes connection with the transported object by raising the lifting platform and placing the transported object on the lifting platform.

6. The transport system according to claim 1 or 2, wherein a spin turn is performed to pivot the automated guided vehicle at a present place in the first traveling direction change operation.

7. The transport system according to claim 1 or 2, wherein the automated guided vehicle performs a second traveling direction change operation of changing the traveling direction of the automated guided vehicle so that the traveling direction of the automated guided vehicle is in parallel with the lateral direction of the transported object in a state of being under the lower part of the transported object.

8. The transport system according to claim 7, wherein the automated guided vehicle performs a coming-out operation of coming out from one side or the other side in the lateral direction of the lower part of the transported object.

9. The transport system according to claim 8, wherein, in the case of the automated guided vehicle connected to the transported object by placing the transported object on the lifting platform so that the traveling direction of the automated guided vehicle is in parallel with the longitudinal direction of the transported object, the automated guided vehicle carries the transported object into the station, and the automated guided vehicle
enters the station together with the transported object, disconnects the transported object by lowering the lifting platform and taking down the transported object from the lifting platform,
performs the second traveling direction change operation, and
performs the coming-out operation to come out from the station.

10. The transport system according to claim 8, wherein, in the case of the automated guided vehicle connected to the transported object by placing the transported object on the lifting platform so that the traveling direction of the automated guided vehicle is in parallel with the longitudinal direction of the transported object, the automated guided vehicle carries the transported object into the station, and the automated guided vehicle
disconnects the transported object by lowering the lifting platform and taking down the transported object from the lifting platform,
performs the second traveling direction change operation,
makes connection with the transported object by raising the lifting platform and placing the transported object on the lifting platform,
enters the station together with the transported object,
disconnects the transported object by lowering the lifting platform and taking down the transported object from the lifting platform, and
performs the coming-out operation to come out from the station.

11. The transport system according to claim 7, wherein a spin turn is performed to pivot the automated guided vehicle at a present place in the second traveling direction change operation.

12. The transport system according to claim 1 or 2, wherein the transported object is a cart configured to carry articles.

13. An automated guided vehicle comprising a lifting platform on which a transported object having a long shape in plan view is placed, the automated guided vehicle being configured to self-travel along a predetermined traveling route, wherein
the automated guided vehicle
has a total length of a vehicle body shorter than a dimension in a longitudinal direction of the transported object in plan view, and a vehicle body width shorter than a dimension in a lateral direction of the transported object in plan view, and
performs a first traveling direction change operation of changing a traveling direction of the automated guided vehicle so that the traveling direction of the automated guided vehicle is in parallel with the longitudinal direction of the transported object in a state of being under a lower part of the transported object.

14. A method for controlling an operation of an automated guided vehicle including a lifting platform on which a transported object having a long shape in plan view is placed, the automated guided vehicle being configured to self-travel along a predetermined traveling route, wherein
the automated guided vehicle has a total length of a vehicle body shorter than a dimension in a longitudinal direction of the transported object in plan view, and a vehicle body width shorter than a dimension in a lateral direction of the transported object in plan view, and
the method comprises a first traveling direction change step of changing a traveling direction of the automated guided vehicle so that the traveling direction of the automated guided vehicle is in parallel with the longitudinal direction of the transported object in a state in which the automated guided vehicle is under a lower part of the transported object.
